# EUROPEAN PATENT APPLICATION

(11) **EP 4 221 266 A1**
(43) Date of publication of application: **02.08.2023**
(21) Application number: 20954386.7
(22) Date of filing: 22.09.2020
(51) Int. Cl.: H04W 4/06

(54) **SYSTEM INFORMATION SENDING METHOD AND APPARATUS, ELECTRONIC DEVICE, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: dompatent von Kreisler Selting Werner - Partnerschaft von Patent- und Rechtsanwälten mbB
(86) International application number: PCT/CN2020/116876
(87) International publication number: WO 2022/061532

(57) **Abstract**

Embodiments of the present disclosure provide a system information sending method and apparatus, an electronic device, and a storage medium. The system information sending method is applied to a first terminal, and the first terminal is in communication connection with a base station and at least one second terminal, respectively. The method comprises: receiving a message sent by the base station, the message comprising system information; obtaining the system information corresponding to the message; determining a target second terminal according to the system information; and sending the system information to the target second terminal. According to the embodiments of the present disclosure, unnecessary data reception and data decoding by the second terminal are avoided, the energy consumption of the second terminal is reduced, and the sending efficiency of the system information is improved.

## Description

### TECHNICAL FIELD

The disclosure relates to the field of wireless communication technology, in particular to a method for sending system information, an apparatus for sending system information, an electronic device, and a storage medium.

### BACKGROUND

A terminal can communicate with the base station through another terminal, instead of communicating directly with a base station. The terminal that communicates directly with the base station is a relay terminal, and the terminal that communicates with the base station through the relay terminal is a remote terminal. The relay terminal and the remote terminal communicate with each other via sidelink.

Sometimes, the system information may be changed when the terminal accesses the base station, the base station sends a system message by broadcasting. The relay terminal sends all the information through broadcasting, but not all the remote terminals are interested in the changed system information, which causes some remote terminals to perform additional data reception and decoding, resulting in additional energy consumption.

### SUMMARY

The disclosure aims to address at least one of the technical defects described above, and the following technical solution is provided.

According to a first aspect of the disclosure, a method for sending system information is provided. The method is applied to a first terminal. The first terminal is in communication connection with a base station and at least one second terminal respectively. The method includes:
receiving a message sent by the base station, in which the message includes system information; obtaining the system information corresponding to the message;
determining one or more target second terminals based on the system information; and
sending the system information to the one or more target second terminals.

In an embodiment, obtaining the system information corresponding to the message includes:
obtaining updated information of the system information corresponding to the message.

In an embodiment, determining the one or more target second terminals based on the system information includes:
determining that the one or more target second terminals include all second terminals being in communication connection with the first terminal based on the updated information of the system information including a Main Information Block (MIB) and/or a first System Information Block (SIB1).

Sending the system information to the one or more target second terminals includes:
sending the message to the one or more target second terminals by unicasting or multicasting; and
broadcasting the updated information of the system information.

In an embodiment, determining the one or more target second terminals based on the system information includes:
determining the one or more target second terminals based on the updated information of the system information and a preset target information identification of the second terminal.

Sending the system information to the one or more target second terminals includes:
sending the updated information of the system information to the one or more target second terminals.

In an embodiment, sending the updated information of the system information to the one or more target second terminals includes:
sending the message to the one or more target second terminals by unicasting and/or multicasting based on the one or more target second terminals including at least two second terminals; and
broadcasting the updated information of the system information.

In an embodiment, sending the updated information of the system information to the one or more target second terminals includes:
sending the updated information of the system information to the one or more target second terminals by unicasting.

In an embodiment, sending the updated information of the system information to the one or more target second terminals by unicasting includes:
based on a number of target second terminals being less than a preset threshold, sending the updated information of the system information to the one or more target second terminals by unicasting.

In an embodiment, obtaining the system information corresponding to the message includes:
obtaining emergency message content corresponding to the message.

Obtaining the emergency message content corresponding to the message includes:
receiving the emergency message content from SIB6, SIB7 and SIB8 of the system information of the base station.

Determining the one or more target second terminals based on the system information includes:
determining that the one or more target second terminals include all second terminals being in communication connection with the first terminal based on the system information including the emergency message content.

Sending the system information to the one or more target second terminals includes:
sending the message to the one or more target second terminals by unicasting and/or multicasting; and
broadcasting the emergency message content.

In an embodiment, the method further includes:
sending a wireless resource location of the system information to the second terminal.

According to a second aspect of the disclosure, a method for sending system information is provided. The method is applied to a second terminal. The second terminal is in communication connection with a first terminal. The method includes:
receiving system information from the first terminal, in which the system information is a message received by the first terminal from a base station, and the message includes the system information; obtaining the system information corresponding to the message; determining one or more target second terminals based on the system information; and sending the system information to the one or more target second terminals.

In an embodiment, the method further includes:
receiving a wireless resource location of the system information from the first terminal, and receiving the system information at the wireless resource location of the first terminal.

In an embodiment, the method further includes:
sending a target information identification to the first terminal, so that the first terminal determines the one or more target second terminals based on updated information of the system information and a preset target information identification of the second terminal.

According to a third aspect of the disclosure, an apparatus for sending system information is provided. The apparatus is applied to a first terminal. The first terminal is in communication connection with a base station and at least one second terminal respectively. The apparatus includes: a first information receiving module, a system information obtaining module, a target terminal determining module, and an information sending module.

The first information receiving module is configured to receive a message sent by the base station, in which the message includes system information.

The system information obtaining module is configured to obtain the system information corresponding to the message.

The target terminal determining module is configured to determine a target second terminal based on the system information.

The information sending module is configured to send the system information to the one or more target second terminals.

In an embodiment, the system information obtaining module is further configured to obtain updated information of the system information corresponding to the message.

In an embodiment, the target terminal determining module further includes: a first determining unit.

The first determining unit is configured to determine that the one or more target second terminals include all second terminals being in communication connection with the first terminal based on the updated information of the system information including a MIB and/or a SIB1.

The information sending module includes: a first sending unit and a first broadcasting unit.

The first sending unit is configured to send the message to the one or more target second terminals by unicasting or multicasting.

The first broadcasting unit is configured to broadcast the updated information of the system information.

In an embodiment, the target terminal determining module further includes: a second determining unit.

The second determining unit is configured to determine the one or more target second terminals based on the updated information of the system information and a preset target information identification of the second terminal.

The information sending module includes: a second sending unit.

The second sending unit is configured to send the updated information of the system information to the one or more target second terminals.

In an embodiment, the second sending unit is configured to send the message to the one or more target second terminals by unicasting and/or multicasting based on one or more target second terminals including at least two second terminals.

The second sending unit is further configured to broadcast the updated information of the system information.

In an embodiment, the second sending unit is configured to send the updated information of the system information to one or more target second terminals by unicasting.

In an embodiment, the second sending unit is configured to, based on a number of target second terminals being less than a preset threshold, send the updated information of the system information to one or more target second terminals by unicasting.

In an embodiment, the system information obtaining module is configured to receive emergency message content from SIB6, SIB7 and SIB8 of the system information of the base station.

The target terminal determining module includes: the second determining unit.

The second determining unit is configured to determine that one or more target second terminals include all second terminals being in communication connection with the first terminal.

The information sending module includes: a third sending unit and a second broadcasting unit.

The third sending unit is configured to send the message to the one or more target second terminals by unicasting and/or multicasting.

The second broadcasting unit is configured to broadcast the emergency message content.

In an embodiment, the apparatus further includes: a location sending module.

The location sending module is configured to send a wireless resource location of the system information to the second terminal.

According to a fourth aspect of the disclosure, an apparatus for sending system information is provided. The apparatus is applied to a second terminal. The second terminal is in communication connection with a first terminal. The apparatus includes: a second information receiving module.

The second information receiving module is configured to receive system information from the first terminal, in which the system information is a message received by the first terminal from a base station, and the message includes the system information; obtain the system information corresponding to the message; determine a target second terminal based on the system information; and send the system information to the one or more target second terminals.

In an embodiment, the apparatus further includes: a location receiving module.

The location receiving module is configured to receive a wireless resource location of the system information from the first terminal, and receive the system information at the wireless resource location of the first terminal.

In an embodiment, the apparatus further includes: an identification sending module.

The identification sending module is configured to send a target information identification to the first terminal, so that the first terminal determines the one or more target second terminals based on updated information of the system information and a preset target information identification of the second terminal.

According to a fifth aspect of the disclosure, an electronic device is provided. The electronic device includes:
one or more processors;
a memory;
one or more applications, in which the one or more applications are stored in the memory and configured to be executed by the one or more processors, and the one or more applications are configured to implement the method for sending system information according to the first aspect or the second aspect of the disclosure.

According to a sixth aspect of the disclosure, a computer readable storage medium having computer programs stored thereon is provided. When the computer programs are executed by a processor, the method for sending system information according to the first aspect or the second aspect of the disclosure is implemented.

The technical solution provided in the disclosure brings the following beneficial effects. The message sent by the base station is received, in which the message includes the system information. The system information corresponding to the message is obtained. The one or more target second terminals are determined based on the system information. The one or more target second terminals are the second terminals that are interested in the system information or need the system information, so that unnecessary data reception and decoding by the second terminals can be avoided, reducing the energy consumption of the second terminals, and improving the efficiency of sending the system information.

### BRIEF DESCRIPTION OF THE DRAWINGS

In order to more clearly illustrate the technical solutions in the embodiments of the disclosure, the following is a brief description of the accompanying drawings that need to be used in the description of the embodiments of the disclosure.
FIG. 1 is a schematic diagram of an application environment of a method for sending system information according to embodiments of the disclosure.
FIG. 2 is a flowchart of a method for sending system information according to embodiments of the disclosure.
FIG. 3 is a flowchart of another method for sending system information according to embodiments of the disclosure.
FIG. 4 is a block diagram of an apparatus for sending system information according to embodiments of the disclosure.
FIG. 5 is a block diagram of another apparatus for sending system information according to embodiments of the disclosure.
FIG. 6 is a block diagram of an electronic device configured for sending system information according to embodiments of the disclosure.

### DETAILED DESCRIPTION

Embodiments of the disclosure are described in detail below, and examples of the embodiments are shown in the accompanying drawings, in which the same or similar numbers indicate the same or similar components or components having the same or similar function. The embodiments described below with reference to the accompanying drawings are exemplary and are intended only to explain the disclosure and are not to be used for limiting the disclosure.

It should be understood by those skilled in the art that, unless the context clearly indicates otherwise, the singular forms "a", "one", "said" and "the" used herein may also include the plural forms. It should be further understood that the term "includes" as used in this disclosure refers to the presence of the described features, integers, steps, operations, components and/or assemblies, but does not exclude the presence or addition of one or more other features, integers, steps, operations, components, assemblies and/or groups thereof. It should be understood that when the component is "connected" or "coupled" to another component, it may be directly connected or coupled to other components, or there may be an intermediate component. In addition, "connected" or "coupled" as used herein may include wirelessly connected or wirelessly coupled. The term "and/or" includes all or any of the units and all combinations of one or more of the associated listed items.

In order to make the purpose, technical solutions and advantages of the disclosure clearer, the embodiments of the disclosure will be described in detail in combination with the accompanying drawings.

Firstly, the disclosure provides a brief explanation of sidelink. A sidelink communication mode supports three transmission modes on sidelink, i.e., unicasting, multicasting and broadcasting, according to a correspondence between a sending terminal and a receiving terminal. The sending terminal sends Sidelink Control Information (SCI) on a Physical Sidelink Control Channel (PSCCH). The SCI carries a resource location of transmission data, source identification, and target identification. After receiving the SCI, the receiving terminal determines whether to receive the corresponding data and the corresponding process based on the source identification and the target identification. In a unicast connection, each terminal corresponds to one target identification. In a multicast connection, each terminal may belong to one or more groups, and each group corresponds to one target identification. In a broadcast connection, all terminals correspond to one target identification.

The disclosure provides a method for sending system information, an apparatus for sending system information, an electronic device, and a computer readable storage medium, to solve the technical problems in the related art as described above.

The technical solutions of the disclosure and how the technical solutions of the disclosure solve the above technical problems are described in detail below in specific embodiments. The following specific embodiments may be combined with each other, and the same or similar concepts or processes may not be repeated in some embodiments. The embodiments of the disclosure will be described below in combination with the accompanying drawings.

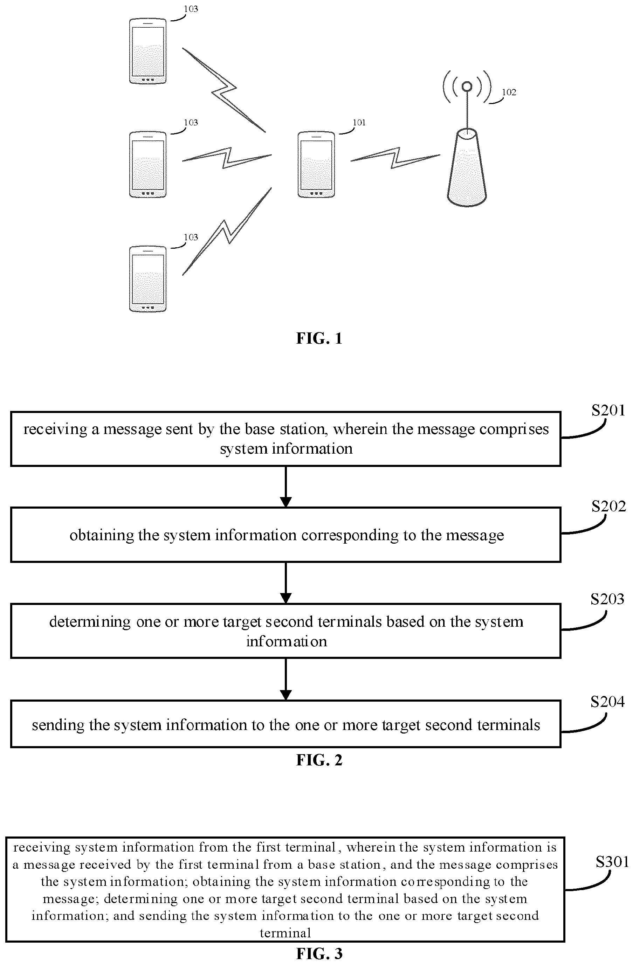

The disclosure provides a method for sending system information that can be applied in an application environment as shown in FIG. 1. The first terminal 101 is in communication connection with the base station 102 and a plurality of second terminals 103 respectively. The first terminal 101 receives a message sent by the base station 102, in which the message includes the system information, obtains the system information corresponding to the message, determines the one or more target second terminals based on the system information, and sends the system information to the one or more target second terminals.

Those skilled in the art can understand that the "terminal" used here is a User Equipment (LTE), which may be a cell phone, a tablet computer, a Personal Digital Assistant (PDA), a Mobile Internet Device (MID). A base station, i.e., a public mobile communication base station, is a type of radio station.

FIG. 2 is a flowchart of a method for sending system information according to embodiments of the disclosure. The method is applied to the above first terminal. The first terminal is in communication connection with a base station and at least one second terminal respectively. The method includes the following steps.

At step S201, a message sent by the base station is received, in which the message includes system information.

In the embodiments of the disclosure, the second terminal may not be directly connected to the base station, and the second terminal communications with the base station through the first terminal. The first terminal may be called a relay terminal, and the second terminal may be called a remote terminal. The communication method between the first terminal and the second terminal is not limited, for example, the first terminal may communicate with the second terminal through sidelink.

The base station sends the system information by broadcasting, and the system information includes important information needs to be learned by the UE for accessing the base station. The UE needs to receive all the system information before accessing the base station and always needs to learn the latest system information. The system information is divided into a MIB and a plurality of SIBs.

The MIB may include the most necessary information required for the UE to access the cell, including system frame number, subcarrier spacing and other information.

The SIB includes SIB1 and other SIBs such as SIB2, SIB3, SIB4, SIB5, SIB6, SIB7, and SIB8. SIBs other than SIB1 are called other SIBs in this disclosure. SIB1 carries scheduling information of other SIBs, access control information, and cell selection information. Other SIBs carry parameters required for other functions, such as cell reselection, location, emergency notification, and sidelink. The UE needs to obtain the MIB and SIB1 all the time. For other SIBs, the LTE selects the information to read according to its needs. The specific definitions and relevant parameters of SIB and MIB are the related art and will not be described in more detail in this disclosure.

When the system information is changed, the base station sends the message to the first terminal. The message includes the system information, such as the updated information of the system information or emergency message content. The type of the message is not limited, for example, the message can be a short message, which can be transmitted on a Physical Downlink Control Channel (PDCCH) using Radio Network Temporary Identity (P-RNTI), and the message can be a short message field using Downlink Control Information (DCI) format, with or without the associated paging message.

In detail, the short message may carry an information notification, which includes a system information modification notification, and an emergency message notification. The first terminal receives the short message from the base station, and the first terminal also receives the system information corresponding to the short message from the base station.

At step S202, the system information corresponding to the message is obtained.

After the first terminal receives the message including the system information from the base station, the system information corresponding to the message is obtained.

For example, the short message carries the information notification. The information notification is a system message modification notification, and the first terminal receives the updated information of the system information from the base station. The information notification is an emergency message notification, and the first terminal receives the emergency message content from the base station. The first terminal receives the emergency message content from the base station, i.e., receives the emergency message content from SIB6, SIB7 and SIB8 of the system information of the base station.

That is, obtaining the system information corresponding to the message includes:
obtaining the updated information of the system message corresponding to the message; or
obtaining the emergency message content corresponding to the message.

Obtaining the emergency message content corresponding to the message includes:
receiving the emergency message content from SIB6, SIB7 and SIB8 of the system information of the base station.

At step S203, a target second terminal is determined based on the system information.

The system information may include the updated information of the system information, and the emergency message content. The target second terminal is a second terminal that needs to receive the system information.

The terminal determines the one or more target second terminals based on the system information. In detail, the first terminal may analyze the system information to determine the content included in the system information, and then the first terminal determines the second terminal requiring the system information based on the contents included in the system information. The second terminal requiring the system information is the target second terminal, and the system information is sent to the target second terminal. The one or more target second terminals are determined based on the system information, i.e., the second terminal requiring the system information is determined to be the target second terminal. When the system information includes the emergency message content, all the second terminals communicating with the first terminal need the emergency message content, and all the second terminals communicating with the first terminal are the target second terminals.

At step S204, the system information is sent to the one or more target second terminals.

Once the one or more target second terminals are determined, the system information can be sent to the one or more target second terminals. The system information received by the target second terminal is the system information required by the target second terminal.

According to the method for sending system information provided by the embodiments of the disclosure, the message sent by the base station is received, in which the message includes the system information. The system information corresponding to the message is obtained. The one or more target second terminals are determined based on the system information. The target second terminals are the second terminals that are interested in the system information or need the system information, so that unnecessary data reception and decoding by the second terminals can be avoided, reducing the energy consumption of the second terminals, and improving the efficiency of sending the system information.

In a possible implementation, in a case that the system information received from the base station includes the updated information of the system information, determining the one or more target second terminals based on the system information includes:

determining that the one or more target second terminals include all second terminals being in communication connection with the first terminal based on the updated information of the system information including a MIB and/or a SIB1.

Sending the system information to the one or more target second terminals includes:
sending the message to the one or more target second terminals by unicasting or multicasting; and
broadcasting the updated information of the system information.

When the second terminal receives the updated information of the system information from the base station, it can be determined whether the updated information of the system information includes the MIB or SIB1. The MIB and SIB1 are important updated information of the system information, and all the second terminals communicatively connected to the first terminal need the updated information of the system information when the MIB or SIB1 of the system information is modified. The updated information of the system information includes only the system information that has been modified. For example, when only the MIB is modified, the updated information of the system information includes only the modified MIB and does not include the SIB1 that has not been modified. When the updated information of the system information includes the MIB and/or SIB1, it can be determined that all the second terminals communicatively connected to the first terminal are the target second terminals.

According to the communication mode between the second terminal and the first terminal, the unicast or multicast sending mode can be selected to send the message to the one or more target second terminals. By sending the message to the one or more target second terminals by unicasting or multicasting, it can be ensured that all the target second terminals receive the message. After the one or more target second terminals receive the message, it receives the updated information of the system information broadcasted by the first terminal from the first terminal, which ensures that the one or more target second terminals receive the updated information of the broadcasted system information, so that the one or more target second terminals can communicate with the base station through the first terminal.

According to the technical solution of the disclosure, the updated information of the system information is sent to all the target second terminals based on the system information including the updated information of the system information, to avoid the situation that some or all of the target second terminals do not receive the updated information.

In a possible implementation, in a case that the system information received from the base station includes the updated information of the system information, determining the one or more target second terminals based on the system information includes:

determining the one or more target second terminals based on the updated information of the system information and a preset target information identification of the second terminal.

Sending the system information to the one or more target second terminals includes:

sending the updated information of the system information to the one or more target second terminals.

The target information identification of the second terminal is the identification corresponding to the system information required by the second terminal. For example, the target information identification may be the identification corresponding to the updated information of the system information required by the second terminal or the identification corresponding to the emergency message content of the system information. The target information identification of the second terminal may be sent to the first terminal by the second terminal in advance.

The one or more target second terminals are determined according to the updated information of the system information and the preset target information identification of the second terminal. For example, in a case that the system information required by the second terminal A is SIB 12 and SIB 14, the target information identification of the second terminal A corresponds to SIB 12 and SIB 14; and the system information required by the second terminal B is SIB8 and SIB 14, the target information identification of the second terminal B corresponds to SIB8 and SIB 14. When the updated information of the system information includes the modified content of SIB8, the one or more target second terminals include the second terminal B. When the modified information includes SIB 14, the one or more target second terminals include the second terminal A and the second terminal B. The determined target second terminals are all second terminals that are interested in the system information or need the system information, so that unnecessary data reception and decoding by the second terminals can be avoided, reducing the energy consumption of the second terminals. It is understood that the target information identification may also correspond to important system information, such as SIB1, MIB, and the emergency message content.

Optionally, based on the updated information of the system information not including the MIB and/or SIB1, the one or more target second terminals are determined based on the updated information of the system information and the preset target information identification of the second terminal.

When the second terminal receives the updated information of the system information from the base station, it is determined whether the updated information of the system information includes the MIB or SIB1. The MIB and SIB1 are important updated information of the system information, and when the MIB or SIB 1 of the system information has not been modified, the updated information of the system information does not include the MIB or SIB1.

In a possible implementation, determining the one or more target second terminals based on the updated information of the system information and the preset target information identification of the second terminal includes:

based on the target information identification of the second terminal corresponding to the updated information of the system information, determining this second terminal as the target second terminal.

When the target information identification of a second terminal corresponds to the updated information of the system information, it is determined that the second terminal is interested in or needs the updated information of the system information, and the second terminal is determined as the target second terminal. When the target information identification of the second terminal A corresponds to SIB 14, and the updated information of the system information includes SIB 14, the second terminal A is determined as the target second terminal.

In a possible implementation, the method includes:
receiving the target information identification of the second terminal from the second terminal and storing the target information identification.

The second terminal can send the interested or required target information identification to the first terminal, and the first terminal can receive the target information identification of the second terminal and store it, to determine the one or more target second terminals based on the updated information of the system information and the preset target information identification of the second terminal.

In a possible implementation, sending the updated information of the system information to the one or more target second terminals includes:
sending the message to the one or more target second terminals by unicasting and/or multicasting based on the one or more target second terminals including at least two second terminals; and
broadcasting the updated information of the system information.

The message is sent by unicasting or multicasting, which can be determined based on the specific settings of the communication link between the second terminal and the first terminal. The message is sent by the unicasting or multicasting mode to prevent the one or more target second terminals from not receiving the message. The first terminal broadcasts the updated information of the system information, and after the one or more target second terminals receive the message, it receives the updated information of the system information broadcasted by the first terminal, so that each target second terminal can receive the updated information of the system information.

In a possible implementation, sending the updated information of the system information to the one or more target second terminals includes:
sending the updated information of the system information to the one or more target second terminals by unicasting.

There are one or more second terminals, the updated information of the system information can be sent directly to the one or more target second terminals by unicasting as needed, and the first terminal does not need to broadcast the updated information of the system information, so that the updated information of the system information is sent at one time.

Optionally, sending the updated information of the system information to the one or more target second terminals by unicasting includes:
based on a number of target second terminals being less than a preset threshold, sending the updated information of the system information to the one or more target second terminals by unicasting.

The value of the preset threshold is not limited. For example, the preset threshold may be 2, 5, or 10. When the number of second terminals is less than the preset threshold, the updated information of the system information is sent by unicasting, such that it is convenient and fast to send the updated information of the system information due to short transmission time, ensuring that all the target second terminals can receive the updated information of the system information.

In a possible implementation, determining the one or more target second terminals based on the system information includes:
determining that the one or more target second terminals include all second terminals being in communication connection with the first terminal based on the system information including the emergency message content.

Sending the system information to the one or more target second terminals includes:
sending the message to the one or more target second terminals by unicasting and/or multicasting; and
broadcasting the emergency message content.

When the system information includes the emergency message content, all the second terminals being in communication connection with the first terminal need to obtain the emergency message content, and it is determined that the one or more target second terminals include all the second terminals being in communication connection with the first terminal.

The message is sent by unicasting or multicasting, which can be determined based on the specific settings of the communication link between the second terminal and the first terminal. The message is sent by unicasting or multicasting to prevent the one or more target second terminals from not receiving the message. The first terminal broadcasts the emergency message content, and after the one or more target second terminals receive the message, it receives the emergency message content broadcasted by the first terminal, so that each target second terminal can receive the emergency message content.

In a possible implementation, the method further includes:
sending a wireless resource location of the system information to the second terminal.

The specific timing for sending the wireless resource location of the system information to the second terminal is not limited, for example, before sending the system information to the one or more target second terminals. The wireless resource location of the system information is sent to the second terminal, and after the second terminal receives the wireless resource location, if necessary, the second terminal can receive the system information at the wireless resource location. When the second terminal is the target second terminal, the target second terminal can receive the updated information of the system information or the emergency message content at the wireless resource location of the first terminal.

FIG. 3 is a flowchart of another method for sending system information according to embodiments of the disclosure. The method is applied to the above second terminal. The second terminal is in communication connection with the first terminal. The method includes the following steps.

At step S301: system information is received from the first terminal, in which the system information is a message received by the first terminal from a base station, and the message includes the system information; obtaining the system information corresponding to the message; determining one or more target second terminals based on the system information; and sending the system information to the one or more target second terminals.

In an embodiment, the second terminal that receives the system information is the target second terminal. The target second terminal receives the system information from the first terminal, and the second terminal communicates with the base station through the first terminal after obtaining the system information.

According to the method, the first terminal receives the message sent by the base station, in which the message includes the system information. The system information corresponding to the message is obtained. The one or more target second terminals are determined based on the system information. Therefore, the target second terminal is the second terminal that is interested in and needs the system information, which avoids unnecessary data reception and decoding by the second terminal, and reduces the energy consumption of the second terminal.

In a possible implementation, the method further includes:
receiving a wireless resource location of the system information from the first terminal, and receiving the system information at the wireless resource location of the first terminal.

The first terminal will send the wireless resource location of the system information to the second terminal, and the second terminal can receive the wireless resource location from the first terminal. When the first terminal broadcasts the system information, the second terminal can receive the system information at the wireless resource location of the first terminal. According to the technical solutions of the disclosure, the second terminal determines the wireless resource location of the system information of the first terminal and receives the system information quickly.

In a possible implementation, the method further includes:
sending a target information identification to the first terminal, so that the first terminal determines the one or more target second terminals based on updated information of the system information and a preset target information identification of the second terminal.

The target information identification is the identification corresponding to the updated information of the system information required by the second terminal. After the first terminal receives the target information identification, the target information identification can be stored, so that after the first terminal receives the system information from the base station, the one or more target second terminals are determined based on the updated information of the system information and the preset target information identification of the second terminal, such that the target second terminal is the target terminal that needs the updated information of the system information.

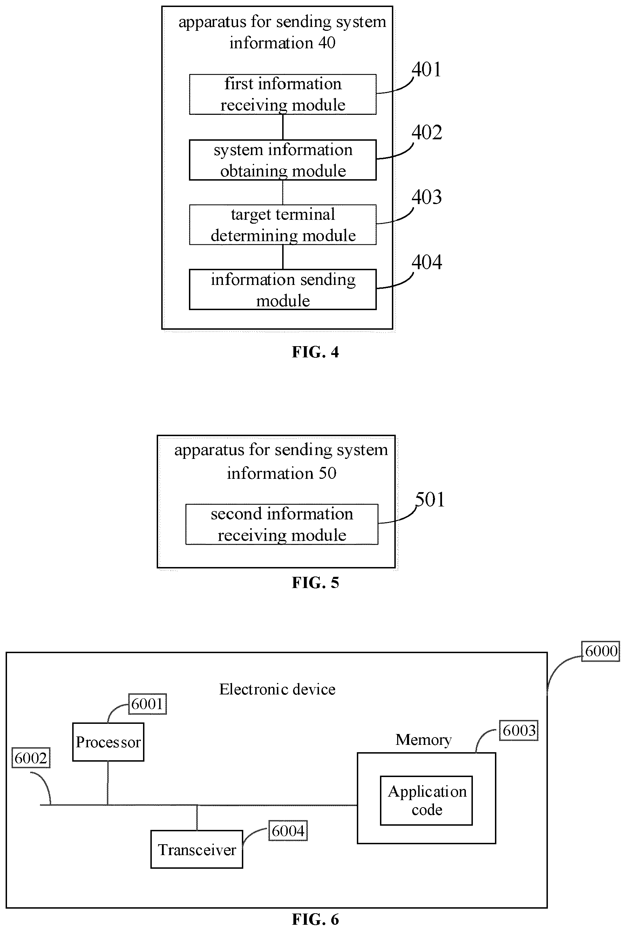

FIG. 4 is a schematic diagram of an apparatus 40 for sending system information according to embodiments of the disclosure. The apparatus 40 is applied to a first terminal. The first terminal is in communication connection with a base station and at least one second terminal respectively. The apparatus 40 may include: a first information receiving module 401, a system information obtaining module 402, a target terminal determining module 403, and an information sending module 404.

The first information receiving module 401 is configured to receive a message sent by the base station, in which the message includes system information.

The system information obtaining module 402 is configured to obtain the system information corresponding to the message.

The target terminal determining module 403 is configured to determine a target second terminal based on the system information.

The information sending module 404 is configured to send the system information to the one or more target second terminals.

With the apparatus 40 provided in the embodiments of the disclosure, the message sent by the base station is received, in which the message includes the system information. The system information corresponding to the message is obtained. The one or more target second terminals are determined based on the system information. Therefore, the target second terminal is the second terminal that is interested in and needs the system information, which avoids unnecessary data reception and decoding by the second terminal, reduces the energy consumption of the second terminal, and improves the transmission efficiency of the system information.

Optionally, the system information obtaining module 402 is further configured to obtain updated information of the system information corresponding to the message.

Optionally, the target terminal determining module 403 includes a first determining unit.

The first determining unit is configured to determine that the one or more target second terminals include all second terminals being in communication connection with the first terminal based on the updated information of the system information including a MIB and/or a SIB1.

The information sending module 404 includes a first sending unit and a first broadcasting unit.

The first sending unit is configured to send the message to the one or more target second terminals by unicasting or multicasting.

The first broadcasting unit is configured to broadcast the updated information of the system information.

Optionally, the target terminal determining module 403 further includes a second determining unit.

The second determining unit is configured to determine the one or more target second terminals based on the updated information of the system information and a preset target information identification of the second terminal.

The information sending module 404 includes a second sending unit.

The second sending unit is configured to send the updated information of the system information to the one or more target second terminals.

Optionally, the second determining unit is configured to determine the second terminal as the target second terminal based on the target information identification of the second terminal corresponding to the updated information of the system information.

Optionally, the apparatus 40 further includes an identification receiving module.

The identification receiving module is configured to receive the target information identification of the second terminal from the second terminal and store the target information identification.

Optionally, the second sending unit is configured to send the message to the one or more target second terminals by unicasting and/or multicasting based on the one or more target second terminals including at least two second terminals.

The second sending unit is further configured to broadcast the updated information of the system information.

Optionally, the second sending unit is configured to send the updated information of the system information to the one or more target second terminals by unicasting.

Optionally, the second sending unit is configured to, based on a number of target second terminals being less than a preset threshold, send the updated information of the system information to the one or more target second terminals by unicasting.

Optionally, the system information obtaining module 402 is configured to obtain the emergency message content corresponding to the message.

Optionally, the system information obtaining module 402 is configured to receive emergency message content from SIB6, SIB7 and SIB8 of the system information of the base station.

Optionally, the target terminal determining module 403 includes the second determining unit.

The second determining unit is configured to determine that the one or more target second terminals include all second terminals being in communication connection with the first terminal.

The information sending module 403 includes a third sending unit and a second broadcasting unit.

The third sending unit is configured to send the message to the one or more target second terminals by unicasting and/or multicasting.

The second broadcasting unit is configured to broadcast the emergency message content.

Optionally, the apparatus 40 further includes a location sending module.

The location sending module is configured to send a wireless resource location of the system information to the second terminal.

FIG. 5 is a schematic diagram of another apparatus 50 for sending system information according to embodiments of the disclosure. The apparatus 50 is applied to a second terminal. The second terminal is in communication connection with a first terminal, and the apparatus 50 includes a second information receiving module 501.

The second information receiving module 501 is configured to receive system information from the first terminal, in which the system information is a message received by the first terminal from a base station, and the message includes the system information; obtain the system information corresponding to the message; determine a target second terminal based on the system information; and send the system information to the one or more target second terminals.

With the apparatus 50 provided in the embodiments of the disclosure, the message sent by the base station is received, in which the message includes the system information. The system information corresponding to the message is obtained. The one or more target second terminals are determined based on the system information. Therefore, the target second terminal is the second terminal that is interested in and needs the system information, which avoids unnecessary data reception and decoding by the second terminal, and reduces the energy consumption of the second terminal.

Optionally, the apparatus 50 further includes a location receiving module.

The location receiving module is configured to receive a wireless resource location of the system information from the first terminal, and receive the system information at the wireless resource location of the first terminal.

Optionally, the apparatus 50 further includes an identification sending module.

The identification sending module is configured to send a target information identification to the first terminal, so that the first terminal determines the one or more target second terminals based on updated information of the system information and a preset target information identification of the second terminal.

As shown in FIG. 6, in an optional embodiment, an electronic device is provided. The electronic device 6000 includes: a processor 6001 and a memory 6003. The processor 6001 is connected to the memory 6003, e.g., via a bus 6002. Optionally, the electronic device 6000 may also include a transceiver 6004. It is noted that the number of the transceiver 6004 in practical applications is not limited to one, and the structure of the electronic device 6000 does not constitute a limitation to the embodiment of the disclosure.

The processor 6001 may be may be a Central Processing Unit (CPU), a general processor, a Digital Signal Processor (DSP), an Application Specific Integrated Circuit (ASIC), a Field Programmable Gate Array (FPGA), or other programmable logic devices, transistor logic devices, hardware components or any combination thereof. The processor 6001 may also be a combination used to implement a computing function, for example, a combination consisting of one or more microprocessors, or a combination consisting of DSPs and microprocessors.

The bus 6002 may include a link on which data can be transmitted between the above components. The bus 6002 may be a Peripheral Component Interconnect (PCI) bus or an Extended Industry Standard Architecture (EISA) bus. The bus 6002 may be divided into an address bus, a data bus, or a control bus. For ease of representation, only one thick line is used in the figure to represent the bus, but it does not indicate that there is only one bus or one type of bus.

The memory 6003 may be a Read Only Memory (ROM), other types of static storage devices storing static information and instructions, a Random Access Memory (RAM), other types of dynamic storage devices storing information and instructions, an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store program codes in the form of instructions or data structures and can be accessed by a computer, which is not limited herein.

The memory 6003 is configured to store application codes for executing the embodiments of the disclosure and is controlled for execution by the processor 6001. The processor 6001 is configured to execute the application codes stored in the memory 6003, to implement the contents shown in the above embodiments.

The electronic device includes, but is not limited to: a terminal and a server.

The embodiments of the disclosure provide an electronic device. The electronic device includes: a memory, a processor, and at least one program stored in the memory for implementing the corresponding contents in the preceding method embodiments when the program is executed by the processor. Compared to the related art, the message sent by the base station is received, in which the message includes the system information; the system information corresponding to the message is obtained; the one or more target second terminals are determined based on the system information. Therefore, the target second terminal is the second terminal that is interested in and needs the system information, which avoids unnecessary data reception and decoding by the second terminal, reduces the energy consumption of the second terminal, and improves the transmission efficiency of the system information.

Embodiments of the disclosure provide a computer-readable storage medium having computer programs stored thereon. When the computer programs are running by a computer, the computer is caused to execute the corresponding contents of the foregoing method embodiments. Compared to the related art, the message sent by the base station is received, in which the message includes the system information; the system information corresponding to the message is obtained; the one or more target second terminals are determined based on the system information. Therefore, the target second terminal is the second terminal that is interested in and needs the system information, which avoids unnecessary data reception and decoding by the second terminal, reduces the energy consumption of the second terminal, and improves the transmission efficiency of the system information.

It should be understood that although steps in the flowchart of the accompanying drawings are shown sequentially as indicated by the arrows, the steps are not necessarily performed sequentially in the order indicated by the arrows. Unless explicitly stated otherwise in the disclosure, there is no strict sequential limitation on the execution of these steps, which may be performed in other orders. In addition, at least some of the steps in the flowchart of the accompanying drawings may include a plurality of sub-steps or a plurality of phases, which are not necessarily executed at the same time, and may be executed at different times. The execution order is not necessarily sequential, and the steps can be performed alternately or alternatively with other steps or at least part of sub -steps or phases of other steps.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for sending system information, applied to a first terminal, wherein the first terminal is in communication connection with a base station and at least one second terminal respectively, and the method comprises:
receiving a message sent by the base station, wherein the message comprises system information;
obtaining the system information corresponding to the message;
determining one or more target second terminals based on the system information; and
sending the system information to the one or more target second terminals.

2. The method of claim 1, wherein obtaining the system information corresponding to the message comprises:
obtaining updated information of the system information corresponding to the message.

3. The method of claim 2, wherein determining the one or more target second terminals based on the system information comprises:
determining that the one or more target second terminals comprise all second terminals being in communication connection with the first terminal based on the updated information of the system information comprising a Main Information Block MIB and/or a first System Information Block SIB1; and
sending the system information to the one or more target second terminals comprises:
sending the message to the one or more target second terminals by unicasting or multicasting; and
broadcasting the updated information of the system information.

4. The method of claim 2, wherein determining the one or more target second terminals based on the system information comprises:
determining the one or more target second terminals based on the updated information of the system information and a preset target information identification of the second terminal; and
sending the system information to the one or more target second terminals comprises:
sending the updated information of the system information to the one or more target second terminals.

5. The method of claim 4, wherein sending the updated information of the system information to the one or more target second terminals comprises:
sending the message to the one or more target second terminals by unicasting and/or multicasting based on the one or more target second terminals comprising at least two second terminals; and
broadcasting the updated information of the system information.

6. The method of claim 4, wherein sending the updated information of the system information to the one or more target second terminals comprises:
sending the updated information of the system information to the one or more target second terminals by unicasting.

7. The method of claim 6, wherein sending the updated information of the system information to the one or more target second terminals by unicasting comprises:
based on a number of target second terminals being less than a preset threshold, sending the updated information of the system information to the one or more target second terminals by unicasting.

8. The method of claim 1, wherein obtaining the system information corresponding to the message comprises:
obtaining emergency message content corresponding to the message;
obtaining the emergency message content corresponding to the message comprises:
receiving the emergency message content from SIB6, SIB7 and SIB8 of the system information of the base station;
determining the one or more target second terminals based on the system information comprises:
determining that the one or more target second terminals comprise all second terminals being in communication connection with the first terminal based on the system information comprising the emergency message content; and
sending the system information to the one or more target second terminals comprises:
sending the message to the one or more target second terminals by unicasting and/or multicasting; and
broadcasting the emergency message content.

9. The method of any one of claims 1-8, further comprising:
sending a wireless resource location of the system information to the second terminal.

10. A method for sending system information, applied to a second terminal, wherein the second terminal is in communication connection with a first terminal, and the method comprises:
receiving system information from the first terminal, wherein the system information is a message received by the first terminal from a base station, and the message comprises the system information;
obtaining the system information corresponding to the message;
determining one or more target second terminals based on the system information; and
sending the system information to the one or more target second terminals.

11. The method of claim 10, further comprising:
receiving a wireless resource location of the system information from the first terminal, and receiving the system information at the wireless resource location of the first terminal.

12. The method of claim 10, further comprising:
sending a target information identification to the first terminal, so that the first terminal determines the one or more target second terminals based on updated information of the system information and a preset target information identification of the second terminal.

13. An apparatus for sending system information, applied to a first terminal, wherein the first terminal is in communication connection with a base station and at least one second terminal respectively, and the apparatus comprises:
a first information receiving module, configured to receive a message sent by the base station, wherein the message comprises system information;
a system information obtaining module, configured to obtain the system information corresponding to the message;
a target terminal determining module, configured to determine a target second terminal based on the system information; and
an information sending module, configured to send the system information to the one or more target second terminals.

14. The apparatus of claim 13, wherein,
the system information obtaining module is further configured to obtain updated information of the system information corresponding to the message.

15. The apparatus of claim 14, wherein the target terminal determining module further comprises:
a first determining unit, configured to determine that the one or more target second terminals comprise all second terminals being in communication connection with the first terminal based on the updated information of the system information comprising a MIB and/or a SIB 1; and
the information sending module comprises:
a first sending unit, configured to send the message to the one or more target second terminals by unicasting or multicasting; and
a first broadcasting unit, configured to broadcast the updated information of the system information.

16. The apparatus of claim 14, wherein the target terminal determining module further comprises:
a second determining unit, configured to determine the one or more target second terminals based on the updated information of the system information and a preset target information identification of the second terminal; and
the information sending module comprises:
a second sending unit, configured to send the updated information of the system information to the one or more target second terminals.

17. The apparatus of claim 16, wherein,
the second sending unit is configured to send the message to the one or more target second terminals by unicasting and/or multicasting based on the one or more target second terminals comprising at least two second terminals, and to broadcast the updated information of the system information.

18. The apparatus of claim 16, wherein,
the second sending unit is configured to send the updated information of the system information to the one or more target second terminals by unicasting.

19. The apparatus of claim 18, wherein,
the second sending unit is configured to, based on a number of target second terminals being less than a preset threshold, send the updated information of the system information to the one or more target second terminals by unicasting.

20. The apparatus of claim 13, wherein,
the system information obtaining module is configured to receive emergency message content from SIB6, SIB7 and SIB8 of the system information of the base station;
the target terminal determining module comprises:
a second determining unit, configured to determine that the one or more target second terminals comprise all second terminals being in communication connection with the first terminal; and
the information sending module comprises:
a third sending unit, configured to send the message to the one or more target second terminals by unicasting and/or multicasting; and
a second broadcasting unit, configured to broadcast the emergency message content.

21. The apparatus of claim 13, further comprising:
a location sending module, configured to send a wireless resource location of the system information to the second terminal.

22. An apparatus for sending system information, applied to a second terminal, wherein the second terminal is in communication connection with a first terminal, and the apparatus comprises:
a second information receiving module, configured to receive system information from the first terminal, wherein the system information is a message received by the first terminal from a base station, and the message comprises the system information; obtain the system information corresponding to the message; determine a target second terminal based on the system information; and send the system information to the one or more target second terminals.

23. The apparatus of claim 22, further comprising:
a location receiving module, configured to receive a wireless resource location of the system information from the first terminal, and receive the system information at the wireless resource location of the first terminal.

24. The apparatus of claim 22, further comprising:
an identification sending module, configured to send a target information identification to the first terminal, so that the first terminal determines the one or more target second terminals based on updated information of the system information and a preset target information identification of the second terminal.

25. An electronic device, comprising:
one or more processors;
a memory;
one or more applications, wherein the one or more applications are stored in the memory and configured to be executed by the one or more processors, and the one or more applications are configured to implement the method for sending system information according to any one of claims 1 to 12.

26. A computer readable storage medium having computer programs stored thereon, wherein when the computer programs are executed by a processor, the method for sending system information according to any one of claims 1 to 12 is implemented.
